# EUROPEAN PATENT APPLICATION

(11) **EP 2 602 280 A1**
(43) Date of publication of application: **12.06.2013**
(21) Application number: 11192809.9
(22) Date of filing: 09.12.2011
(51) Int. Cl.: C08G 77/60, C08G 77/54, C08G 77/56

(54) **One-pot synthesis of SiBNC preceramic polymer**

(71) Applicant: Max-Planck-Gesellschaft zur Förderung der Wissenschaften e.V., 80539 München (DE)
(72) Inventor: Wilfert, Jakob, 70188 Stuttgart (DE); Jansen, Martin, 53127 Bonn (DE)
(74) Representative: Dey, Michael

(57) **Abstract**

The present invention relates to a one-pot synthesis for an SiBNC preceramic polymer.

## Description

The present invention relates to a one-pot synthesis of an SiBNC preceramic polymer.

Amorphous SiBNC ceramics have been developed as new high temperature materials, challenging the binary compounds SiC and Si₃N₄. They show a high resistance against crystallization at least up to 1700°C, and high oxidation stability up to 1500°C, due to the formation of a SiO₂/BN double layer [H.-P. Baldus, M. Jansen, D. Sporn, Ceramic fibers for matrix composites in high-temperature engine applications, Science, 285, 699-703, 1999; H.-P. Baldus, Jansen, Novel High-Performance Ceramics-Amorphous Inorganic Networks from Molecular Precursors, Angew. Chem. Int. Ed., 328-343, 1997]. In respect to this combination of properties, they even surpass the crystalline binaries. A low density of 1.8 g/cm³, compared to 3.2 g/cm³ for SiC or Si₃N₄ [K.A. Schwetz, Silicon carbide based hard materials, in: R. Riedel (Ed.), Handbook of ceramic hard material, Wiley-VCH Verlag GmbH, Weinheim, 2000, 683-748; A.F. Holleman, E. Wiberg, N. Wiberg, Lehrbuch der anorganischen Chemie, 102 ed., Walter de Gruyter, Berlin, 2007], originates from the random network structure. Since grain boundaries are absent in fibers drawn from preceramic polymers, the creep behaviour, measured with bend stress relaxation, is superior to commercial SiC fibers [H.P. Baldus, G. Passing, H. Scholz, D. Sporn, M. Jansen, J. Göring, Properties of amorphous SiBNC-ceramic fibers. Key Eng. Mater. 127-131, 177-184, 1997].

Crucial for retaining the amorphous state up to high temperatures is a homogeneous distribution of the constituent elements, which can be realized by pyrolysis of preceramic polymers made from single source precursors. The first monomers, which were utilized for polymerization, were chlorinated borosilazanes like TADB (trichlorosilylamino-dichloroborane) [H.-P. Baldus, O. Wagner, M. Jansen, Synthesis of advanced ceramics in the systems Si-B-N and Si-B-N-C employing novel precursor compounds, Mat. Res. Soc. Symp. Proc., 271, 821-826, 1992; H.-P. Baldus, M. Jansen, O. Wagner, New materials in the system Si-(N,C)-B and their characterization, Key Eng. Mater., 89-91, 75-80, 1994]. The single source precursors are aminolyzed to a liquid polysilazane precursor.

The multiple-stage synthesis strategy used in this approach is accompanied by losses in yield, since expensive reactants are used in excess and purification of intermediate products is unavoidable. Recently, a one-step procedure for a preceramic SiBNC polymer was proposed [J. Lee, D.P. Butt, R.H. Baney, C.R. Bowers, J.S. Tulenko, Synthesis and pyrolysis of novel polysilazane to SiBCN ceramic, J. Non-Crystall. Solids, 351, 2995-3005, 2005]. Hexamethyldisilazane was reacted simultaneously with trichlorsilane and trichlorborane at eliminating chlorotrimethylsilane, and finally crosslinked to a polymer by subsequent thermal treatment.

After complete conversion, no carbon is left in the polymer, since all trimethylsilyl groups split off. In fact, this is reflected by the composition of the ceramic. The carbon content is reduced to only 5 wt% during pyrolysis, which affects the high temperature properties.

For this reason, the procedure was modified by starting from heptamethyldisilazane instead of hexamethyldisilazane and dichloromethylsilane instead of trichlorosilane, respectively [Y. Tang, J. Wang, X.-D. Li, H. Wang, W.-H. Li, X.-Z. Wang, Preceramic polymer for Si-B-N-C fiber via one-step condensation of silane, BCl3, and silazane, J. Appl. Polym. Sci., 110, 921-928, 2008; Y. Tang, J. Wang, X. Li, Z. Xie, H. Wang, Y. Wang, One-pot synthesis of novel polyborosilazane to SiBNC fibers, Inorg. Chem. Comm. 12, 602-604, 2009]. In this way, ceramics with 10 wt% and 21 wt% of carbon are obtained. However, heptamethyldisilazane is quite expensive and moderately priced alternatives are desirable. Its easiest replacement is methylamine, which polymerizes the chlorines by HCl elimination. Nitrogen bridged polymers with an N-methyl function are up to now synthesized by the aminolysis of DMTA (dichloroboryl methyl trichlorosilyl amine). DMTA is synthesized in a semi-continuous two step gas phase reaction from methylamine, SiCl₄ and BCl₃ [M. Weinmann, M. Kroschel, T. Jäschke, J. Nuss, M. Jansen, G. Kolios, A. Morillo, C. Tellaeche, U. Nieken, Towards continuous processes for the synthesis of precursors of amorphous Si/B/N/C ceramics, J. Mater. Chem. 18, 1810-1818, 2008].

The approach using a single source precusor thus necessitates a laborious multiple-stage synthesis while in the other approach relatively expensive disilazanes have to be used.

Hence, it is an object of the invention to provide an effective and therefore less expensive process for producing preceramic polymers, in particular, SiBNC-preceramic polymers.

This object is achieved according to the invention using a method for the production of a preceramic polymer comprising reacting a mixture of at least two compounds selected from SiHalₓR₄₋ₓ, BHal_{y}R'_{3-y}, TiHalₓR₄₋ₓ, AlHal_{y}R'_{3-y}, GaHal_{y}R'_{3-y}, InHal_{y}R'_{3-y}, GeHalₓR₄₋ₓ, PHal_{y}R_{3-y}, PHal_{z}R_{5-z}, ZrHalₓR₄₋ₓ, VHal_{y}R'_{3-y}, VHalₓR₄₋ₓ, NbHal_{z}R_{5-z}, TaHal_{z}R_{5-z}, CrHal_{y}R'_{3-y}, MoHalₓR₄₋ₓ, MoHal_{z}R_{5-z}, WHal_{z}R_{6-z}, FeHal_{y}R'_{3-y} or ZnCl₂,
wherein x is an integer from 1 to 4,
y is an integer from 1 to 3,
z is an integer from 1 to 5,
R is hydrogen or a hydrocarbon residue,
R' is hydrogen or a hydrocarbon residue and
Hal is halogen,
with a primary amine R¹-NH₂,
wherein R¹ is a hydrocarbon residue.

The invention, in particular, relates to a method for the production of an SiBNC preceramic polymer comprising reacting a mixture of SiHalₓF₄₋ₓ and BHal_{y}R'_{3-y}, wherein x is an integer from 1 to 4, R is hydrogen or a hydrocarbon residue, y is an integer from 1 to 3, R' is hydrogen or a hydrocarbon residue and Hal is halogen, with a primary amine R¹-NH₂, wherein R¹ is a hydrocarbon residue.

An effective synthesis process for preceramic SiBNC-polymers is achieved in the present invention by adding a mixture of halogensilanes, in particular chlorosilanes and halogenboranes, in particular BCl₃ to primary amines, in particular methylamine in a one-step or one-pot synthesis.

In order to avoid phase separation and to obtain carbon-containing precursors, according to the invention primary amines are employed, the reduced reactivity of which results in a homogeneous network structure of carbon-containing preceramic polymers. In the method according to the invention a viscous liquid is obtained, which is inter alia suitable for conventional moulding techniques or for fiber spinning or infiltration.

The viscosity can be tuned by a temperature treatment.

The preceramic polymer is preferably subjected to a temperature treatment in the range of 100°C to 300°C, particularly preferably of 150°C to 250°. Depending on the duration and temperature of this temperature treatment, the viscosity of the preceramic polymer is adjusted and in particular increased. Suitable process durations are from 10 minutes to five hours, in particular at least 30 minutes, more preferably at least one hour and up to three hours, even more preferably up to two hours.

According to the invention a mixture of at least two compounds selected from SiHalₓR₄₋ₓ, BHal_{y}R'_{3-y}, TiHalₓR₄₋ₓ, AlHal_{y}R'_{3-y}, GaHal_{y}R'_{3-y}, InHal_{y}R'_{3-y}, GeHalₓR₄₋ₓ, PHal_{y}R'_{3-y}, PHal_{z}R_{5-z}, ZrHalₓR₄₋ₓ, VHal_{y}R'_{3-y}, VHalₓR₄₋ₓ, NbHal_{z}R_{5-z}, TaHal_{z}R_{5-z}, CrHal_{y}R'_{3-y}, MoHalₓR₄₋ₓ, MoHal_{z}R_{5-z}, WHal_{z}R_{6-z}, FeHal_{y}R'_{3-y} or ZnCl₂ is added to a primary amine R¹-NH₂.

SiHalₓR₄₋ₓ, TiHalₓR₄₋ₓ, GeHalₓR₄₋ₓ, ZrHalₓR₄₋ₓ, VHalₓR₄₋ₓ and/or MoHalₓR₄₋ₓ, in particular, SiHalₓR₄₋ₓ can be one of the starting materials applied, wherein x is an integer from 1 to 4, in particular 3 or 4 and particularly preferred 4, R is at each occurance independently hydrogen or a hydrocarbon residue, in particular a hydrocarbon residue having 1-20 C-atoms, preferably 1-7 C-atoms, more preferably 1-2 C-atoms and most preferably R is CH₃. The hydrocarbon residue R preferably only exhibits the elements C and H. Hal stands for halogen, i.e. F, Cl, Br or J, most preferably for Cl. SiHal₄, in particular SiCl₄ are most preferred. Further preferred is SiCl₃CH₃.

Other starting materials are BHal_{y}R'_{3-y}, AlHal_{y}R'_{3-y}, GaHal_{y}R'_{3-y}, InHalyR'_{3-y}, PHal_{y}R'_{3-y}, VHal_{y}R'_{3-y}, CrHal_{y}R'_{3-y} and/or FeHal_{y}R'_{3-y}, in particular, BHal_{y}R'_{3-y}, wherein y is an integer from 1 to 3, in particular 2 or 3 and particularly preferred 3. R' is at each occurance independently hydrogen or a hydrocarbon residue, in particular a hydrocarbon residue having 1-20 C-atoms, preferably 1-7 C-atoms, more preferably 1-2 C-atoms and most preferably R' is CH₃. The hydrocarbon residue R' preferably only exhibits the elements C and H. Hal stands for halogen, i.e. F, Cl, Br or J and preferably Cl. BHal₃ and in particular BCl₃ are most preferred.

Further suitable starting materials are PHal_{z}R_{5-z}, NbHal_{z}R_{5-z}, TaHal_{z}R_{5-z}, MoHal_{z}R_{5-z}, and/or WHal_{z}R_{5-z}, wherein z is an integer from 1 to 5, in particular, 3, 4 or 5 and particularly preferred 5. R is at each occurance independently hydrogen or a hydrocarbon residue, in particular a hydrocarbon residue having 1-20 C-atoms, preferably 1-7 C-atoms, more preferably 1-2 C-atoms and most preferably R is CH₃. The hydrocarbon residue R preferably only exhibits the elements C and H. Hal stands for halogen, i.e. F, Cl, Br or J, most preferably for Cl.

According to the invention, in particular, a mixture of SiHalₓR₄₋ₓ and BHal_{y}R'_{3-y} is added to a primary amine R¹-NH₂.

SiHalₓR₄₋ₓ is one of the preferred starting materials applied, wherein x is an integer from 1 to 4, in particular 3 or 4 and particularly preferred 4.

R is at each occurance independently hydrogen or a hydrocarbon residue, in particular a hydrocarbon residue having 1-20 C-atoms, preferably 1-7 C-atoms, more preferably 1-2 C-atoms and most preferably R is CH₃. The hydrocarbon residue R preferably only exhibits the elements C and H.

Hal stands for halogen, i.e. F, Cl, Br or J, most preferably for Cl. SiHal₄, in particular SiCl4 are most preferred. Further preferred is SiCl₃CH₃.

Another preferred starting material is BHal_{y}R'_{3-y}, wherein y is an integer from 1 to 3, in particular 2 or 3 and particularly preferred 3. R' is at each occurance independently hydrogen or a hydrocarbon residue, in particular a hydrocarbon residue having 1-20 C-atoms, preferably 1-7 C-atoms, more preferably 1-2 C-atoms and most preferably R' is CH₃. The hydrocarbon residue R' preferably only exhibits the elements C and H. Hal stands for halogen, i.e. F, Cl, Br or J and preferably Cl. BHal₃ and in particular BCl₃ are most preferred.

According to the invention a one-pot synthesis, which can also be called one-step synthesis is performed. Therefore, the reactants are not introduced sequentially into the reaction but simultaneously. In particular, SiHalₓR₄₋ₓ and BHal_{y}R'_{3-y} are not introduced sequentially into the reaction but simultaneously.

A third starting material is a primary amine of the formula R¹-NH_{2'} wherein R¹ is a hydrocarbon residue, in particular a hydrocarbon residue having 1-20 C-atoms preferably 1-7 C-atoms, more preferably 1-2 C-atoms and most preferably R¹ is CH₃. R¹ preferably exhibits only the elements C and H. CH₃-NH₂ (methylamine) is most preferred.

According to the invention, an excess of primary amine is preferably provided. In particular > 1.1 times, preferably > 1.5 times and more, preferably > 2 times stoichiometric excess of primary amine is provided. At ambient pressure the reaction is preferably performed under cooling conditions, for example to a temperature of less than -6°C, in particular less than -30°C. Further, the reaction is preferably performed under inert atmosphere, in particular under nitrogen or nobel gas atmosphere, preferably under argon atmosphere. The reaction of a mixture of SiHalₓR₄₋ₓ and BHal_{y}R'_{3-y} with a primary amine is preferably performed in liquid phase. Optionally, the starting materials are solved in appropriate solvents, so as to be present in liquid form, for example in a methylamine/methylamine hydrochloride mixture with a higher boiling point. Optionally pressure is applied to the system to maintain the liquid state of the reactants at higher temperatures.

The reaction according to the invention is preferably conducted in an aprotic organic solvent. Suitable solvents are for example hexan, toluol, pentane, benzene, chloromethane, dichloromethane, trichloromethane, heptan, octan or mixtures thereof.

By variation of the amounts of SiHalₓR₄₋ₓ and BHal_{y}R'_{3-y} employed, the ratio Si/B in the resulting polymers and thus in the later produced ceramic can be adjusted.

Preferably, the ratio of SiHalₓR₄₋ₓ to BHal_{y}R'_{3-y} is 1:10 to 10:1 (mol/mol), more preferably 2:1 to 1:2.

In a preferred embodiment the byproduct NH₄Hal, in particular NH₄Cl formed during the reaction is separated off, e.g. by filtration or by phase separation. Thereby the amoniumhalogenide/amine-phase is separated off from the solvent/polymer-phase.

Upon removing the solvent, the preceramic polymer (which also can be termed precursor polymer) is obtained. The precursor polymer obtained according to the invention is a viscous liquid, which can be subjected to common moulding processes. If desired, the viscosity of the preceramic polymer can be adjusted using a temperature treatment. Therein in particular an increase in viscosity can be obtained by using a temperature of from 100°C to 300°C, in particular from 150°C to 250°C.

In a particular preferred embodiment of the invention a ceramic is formed from the preceramic polymer produced as described herein by pyrolysis. Thus, the invention also comprises a method for the production of a ceramic comprising
i) providing a preceramic polymer as described herein, and
ii) pyrolysis of the preceramic polymer at a temperature of from 360°C up to 1400°C produce a ceramic.

In particular, the invention also comprises a method for the production of an SiBNC ceramic comprising
i) providing an SiBNC preceramic polymer as described herein and
i) pyrolysis of the SiBNC preceramic polymer at a temperature of from 360°C up to 1400°C produce an SiBNC ceramic.

The pyrolysis is preferably performed under inert atmosphere, in particular an N₂-atmosphere or a noble gas atmosphere, such as an argon atmosphere. The density of the produced ceramic is preferably less than 2.5 g/cm³, in particular less than 2 g/cm³. Preferably, the density is at least 1.6 g/cm³ and more preferably at least 1.7 g/cm³. With the method according to the invention particularly a ceramic having a density of 1.80 g/cm³ can be obtained.

The preferred ceramic according to the invention comprises the elements Si, B, N and C. Oxygen is present, if at all, only in small amounts, in particular less than 2 wt% (with respect to the total weight of the ceramic) and more preferably less than 1.5 wt%. The ceramic according to the invention particularly exhibits a composition SiBN_{2.4}C_{1.6}.

The invention is further illustrated in the accompanying figures and the following examples.
Fig. 1: FTIR spectroscopy of a DMTA derived polymer and a polymer from the one-pot synthesis.
Fig. 2: Thermogravimetric analysis of the polymer ceramization during pyrolysis (10°C/min, argon).
Fig. 3: ²⁹Si-MAS-NMR spectra of the ceramics derived from DMTA and one-pot synthesis, respectively. The signals of crystalline Si₃N₄ and SiC are shown as a reference for the chemical surrounding of silicon.
Fig. 4: TGA of the ceramics to 1900°C (10°C/min, helium flow).
Fig. 5: X-ray powder diffraction of DMTA-derived ceramic and the material obtained from the one-pot synthesis, as pyrolysed at 1400°C, after 3 h annealing treatment at 1565°C and 1660°C, and after the TGA measurement to 1900°C.

### Comparison Example 1

### DMTA (Dichloroboryl methyl trichlorsilyl amine)

The single-source precursor DMTA is produced in a semi-continuous gas phase reaction. In a first step, SiCl₄ is reacted with methylamine at 100°C. (CH₃)NH₄Cl is precipitated on silicon carbide filters, which are regenerated by sublimation of the salt. In the second step, the molecule is further reacted with BCl₃, forming a chlorinated borosilazane, and NH₄(CH₃)(SiCl₃)Cl as solid by-product, which is also removed by filtration. The reaction scheme for the synthesis of DMTA is shown below.

For polymerization, this single source precursor DMTA (300 g, 1.22 mol) is added slowly to an excess of methylamine (1500 ml, 33.8 mol) at -30°C under vigorous stirring. Since the reaction is highly exothermic, the methylamine is diluted in 2 l hexane prior to the reaction. After the reaction is 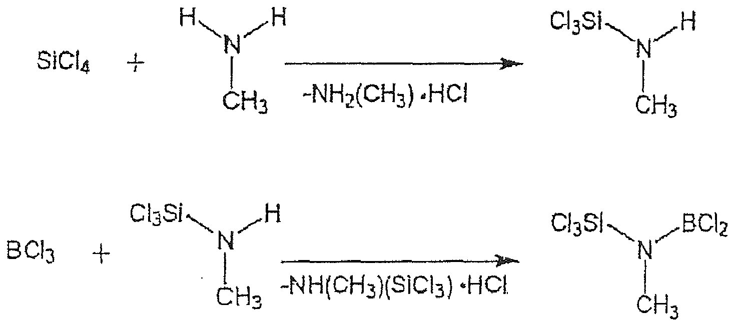 finished, two phases form within several hours. On the bottom settles the methylamine hydrochloride/methylamine solution. The upper phase consists of the hexane/polymer solution. It is collected and the hexane is removed under reduced pressure.

The polymerization reaction of DMTA with methylamine is shown below.

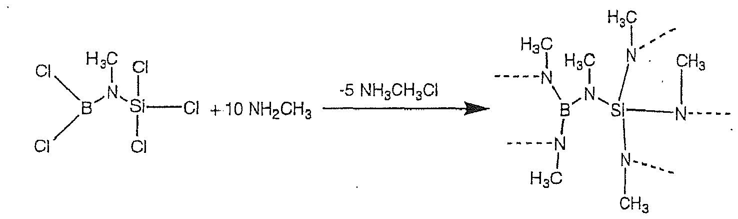

### Example 2

### One-pot synthesis

For the one-pot synthesis 105 ml methylamine (stochiometric 105.6 ml, 2.38 mol, 73.92 g) are condensed at -70°C (dry ice and isopropanol) in a 2 l three neck-flask and diluted with 1 l hexane. 20 ml SiCl₄ (0.17 mol, 29.66 g) and 15.5 ml BCl₃ (0.17 mol, 20.55 g) are mixed in a dropping funnel at -70°C (dry ice and isopropanol) and added dropwise to the methylamine under flowing argon. The byproduct methylamine hydrochloride is filtrated and hexane is removed under reduced pressure.

### Example 3

### Pyrolysis

The pyrolysis of the polymers was carried out in quartz glass tubes up to 900°C with a rate of 5°C/min and 180 min dwell time at 350°C and 900°C. A further heat treatment up to 1400°C (dwell 180 min) finishes the conversion to amorphous SiBNC ceramic.

### Example 4

### Analyses

FTIR spectra were recorded with a Bruker IFS 113v in the range of 4000 cm⁻¹ to 400 cm⁻¹ and a resolution of 2 cm⁻¹. For the measurement, 1-2 mg of the substance were mixed with 500 mg KBr within a glove box. The powder was pressed to pellets with a diameter of 13 mm at 0.8 GPa.

²⁹Si MAS NMR spectra were recorded with a Bruker AV-III 400 spectrometer, using a ²⁹Si Larmour frequency of 79.496 MHz at a magnetic field strength of 9.4 T. Sample powders were placed in 4 mm zirconia rotors and the magic-angle spinning frequency was set to 8 kHz. One thousand transients with recycle delays of 1 min to 1 hour were collected for each spectrum. The chemical shifts are referenced against solid sodium 3-(trimethylsilyl)-propane-1-sulfonate (DSS) at 1.53 ppm.

The degradation of the polymer during pyrolysis was investigated by thermogravimetric analysis in a Netzsch STA 409 under argon. High temperature stability of the ceramics up to 1900°C was measured using a Netzsch STA 409 equipped with a carbon furnace under helium flow. In this set-up, high temperature annealing experiments were conducted for 180 min at static temperatures programmed to 1600°C and 1700°C, which were recorded with WRe thermocouples. Therefore the accurate sample temperature was determined as 1556°C instead of 1600°C and 1660°C instead of 1700°C.

With a Micromeritics AccuPyc II 1340 helium pycnometer the density of ceramic powder samples was determined. The nitrogen and oxygen content were quantified simultaneously in a Leco TC-438 hot-gas extraction analyzer. For carbon, a Leco C-200 hot-gas extraction analyzer was used, and the elements boron and silicon were measured with a Vista Prosimultanes ICP-OES spectrometer. Ceramic powder was digested in Teflon autoclaves by 48% HF [O. Buresch, H.G. Von Schnering, Fresenius Z. Anal. Chem., 319, 418-420, 1984]. X-ray powder diffraction patterns were recorded on a STOE Stadi-P diffractiometer in transmission mode with Debye-Scherrer geometry (CuK_{α1}, position sensitive detector PSD).

The schematic structure of preceramic polymers prepared from DMTA and in one-pot synthesis from SiCl₄, BCl₃ and CH₃NH₂ is shown below.

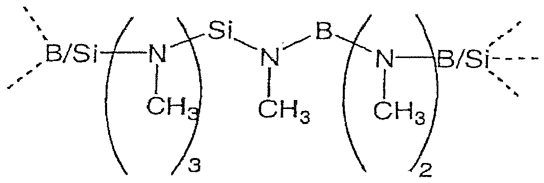

Four-fold bonded silicon and three-fold bonded boron are bridged by N(CH₃) units. In the single source precursor DMTA, one silicon-nitrogen-boron unit is already the main structural feature of the precursor molecule. To achieve this arrangement, the two step gas phase synthesis is necessary. The polymer is formed by aminolysis of DMTA (cf. Comparative Example 1).

In the one-pot synthesis, the chlorine atoms of SiCl₄ and BCl₃ are reacted with methylamine in excess directly, to form tris(methylamino)borane and tetrakis(methylamino)silane in a highly exothermic reaction. A polymer with a random arrangement of boron and silicon is formed by subsequent condensation reactions.

The aminolysis and the subsequent polycondensation reaction of the preceramic polymer in the one-pot synthesis are shown below.

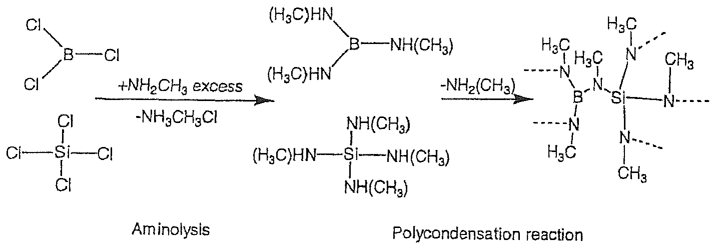

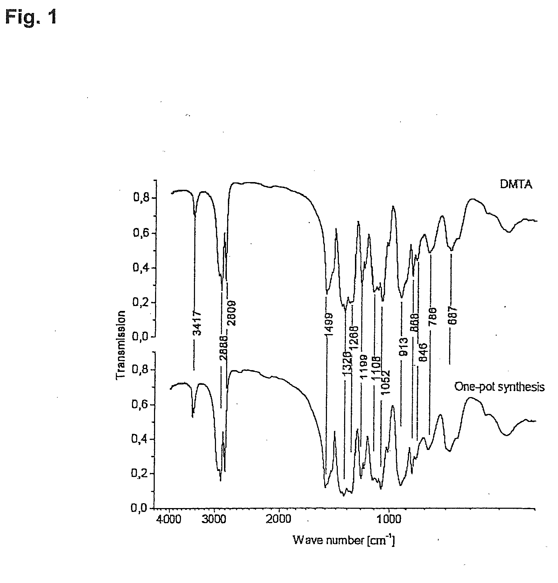

A comparison of the infrared spectra shows the close similarity of the structure units present in both polymer precursor (fig. 1, table 1), the signal positions as well as the intensities are matching almost completely, indicating virtually identical chemical consitution for the two systems.

**Table 1: Signals of FTIR spectroscopy [cm⁻¹] and corresponding vibrations.**

| | | | |
|---|---|---|---|
| 3417 | v(NH) | 1108 | δ(NH) |
| 2888 | v(CH₃) | 1052 | δ(NH) |
| 2809 | v(CH₃) | 931 | δ(SiH) |
| 1499 | δ(CH₃) | 868 | v(CH₃) |
| 1326 | v(BN) | 846 | v(CH₃) |
| 1268 | δ(CH₃) | 786 | v(CH₃) |
| 1199 | δ(NH) | 687 | v(BN) |
| 1173 | δ(NH) | | |

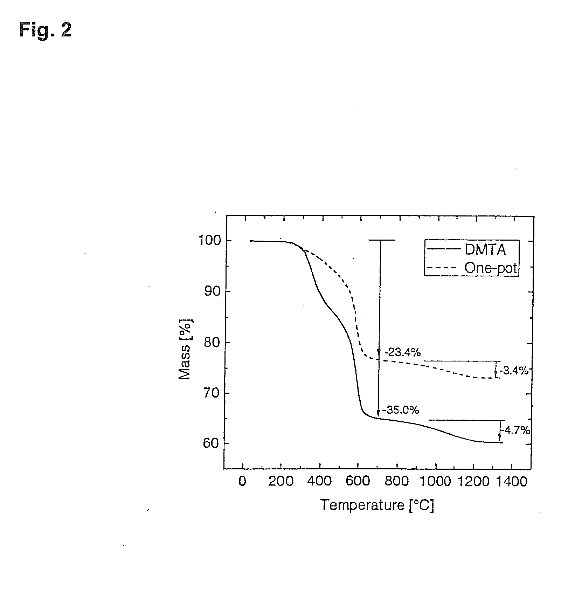

During a heat treatment up to 1400°C under inert atmosphere (argon), these polymers are pyrolysed to SiBNC ceramics. The degradation behaviour was investigated by thermogravimetric analysis (fig. 2). Most of the decomposition takes place below 700°C, with a resulting mass loss of 35% for the DMTA polymer and 23.4% for the one-pot synthesis. In the final stage of ceramization up to 1400°C another 4.7% and 3.4% mass losses are observed for the DMTA precursor and the one-pot synthesis, respectively. The ceramic yield of the one-pot synthesized polymer with 73.2% even surpasses the yield of the DMTA polymer (60.3%) by about 13%.

Both ceramics only show traces of oxygen as a negligible impurity (table 2). The resulting compositions for SiBN₂.₄C₁.₆ (one-pot synthesis) and SiBN_{2.4}C_{1.4} (DMTA precursor) are almost similar, a slight difference might occur due to deviations in the pyrolysis procedure and measurement uncertainties.

**Table 2: Elemental analysis [wt%], and empirical formula of the final ceramics.**

| | Si | B | N | C | O | Composition |
|---|---|---|---|---|---|---|
| DMTA | 30.74 | 11.93 | 36.64 | 18.89 | 0.81 | SiBN_{2.4}C_{1.4} |
| One-pot | 31.28 | 11.55 | 35.25 | 20.84 | 1.15 | SiBN_{2.4}C_{1.6} |

The densities of the amorphous networks of 1.80 g/cm³ (one-pot synthesis) and 1.82 g/cm³ (DMTA precursor) are also the same, within the accuracy of the measurement.

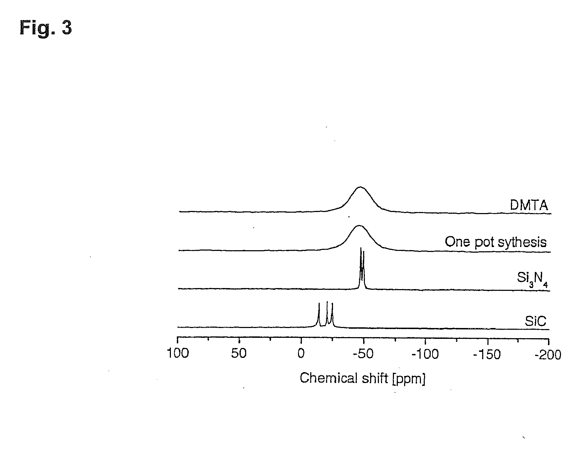

A comparison of the ²⁹Si-MAS-NMR spectra shows the same broad signals for both ceramic systems (fig. 3). Their positions coincides with the reference Si₃N₄, indicating similar SiN₄ structural units in both networks. The broadening is caused by amorphous distortions of the tetrahedra.

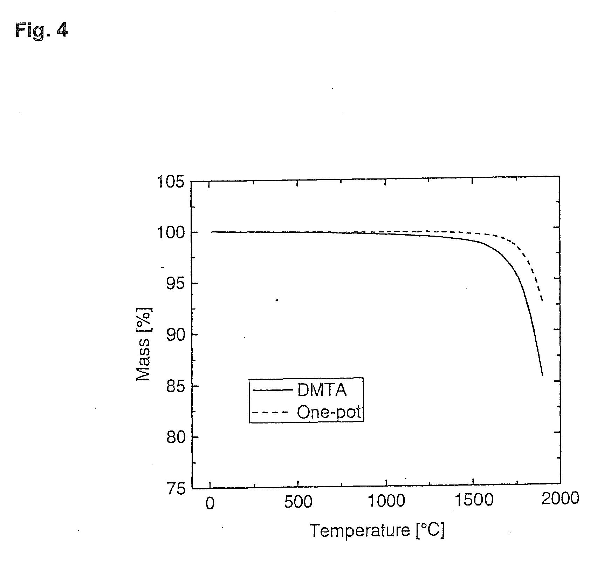

According to TGA, the thermal stability of ceramic material made from the one-pot synthesized polymer exceeds the stability of DMTA-derived SiBNC (fig. 4). In table 3 a selection of values taken from the TGA curves are listed. A mass loss of 2.5% is taken as onset of decomposition. The final mass loss observed at 1900°C is determined by temperature limitations of the experimental setup and does not represent a complete conversion to stable phases. With these criteria, the onset of mass loss is seen at 1785°C for the one-pot synthesized system, while the DMTA-derived ceramic starts to decompose already at 1716°C. At the maximum temperature of 1900°C, a mass loss of 7.3% (one-pot synthesis) and 14.4% (DMTA-derived) is observed. An explanation of the higher stability could be found in the formation of stable clusters enriched in silicon and boron, respectively, during the polymerization. Structure elements like borazine rings could be formed easier, if the elements are not arranged in the defined monomeric units.

**Table 3: Comparison of the mass loss of the ceramics, determined with TGA to 1900°C (10°C/min, helium flow).**

| Precursor | Mass loss of 2.5% | Mass loss of 5% | Mass loss at Tₘₐₓ |
|---|---|---|---|
| DTMA | 1716°C | 1784°C | 14.4 wt% |
| One-pot synthesis | 1785°C | 1854°C | 7.3 wt% |

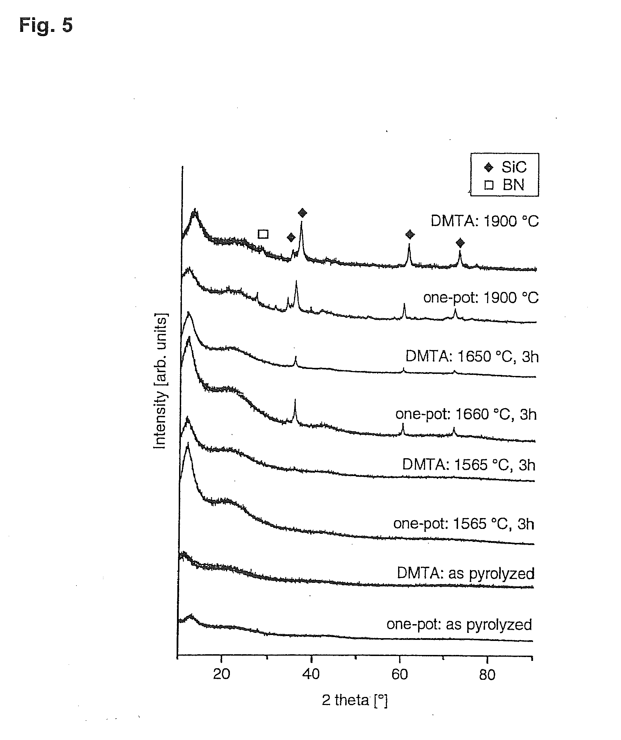

X-ray powder diffraction confirms the amorphous state of the pyrolyzed ceramics (fig. 5). After an annealing procedure at 1556°C for 3 h both systems still stay amorphous. If the annealing temperature is set to 1660°C, reflexes of SiC are observed in the X-ray powder diffraction pattern after the thermal treatment. During the TGA up to 1900°C, both systems form SiC with stacking disorder due to the fast healing rate, which is seen in the additional reflection at 36.4°C, presence of turbostatic boron nitride is indicated by a small Bragg reflection at 27.8°C.

### Example 5

### One-pot synthesis with CH₃SiCl₃, BCl₃ and CH₃NH₂

In a dropping funnel 0.17 mol BCl₃ (20.0 g; 15.1 ml) are condensed (dry ice/isopropanol) and 0.17 mol methyltrichlorosilane (25.6 g; 20 ml) are added. In a cooled three neck-flask (dry ice/isopropanol) 2,38 mol monomethylamine (73.92 g; 105.6 ml) are diluted with 1 I hexane. The dropping funnel is openend in stages, during the reaction argon is used for rinsing. Precipitated methylammonium chloride is removed by filtration, hexane is removed at 10⁻² mbar and newly precipitated salt is again filtered from the polymer.

This example shows the versatility of the one-step synthesis, since a large number of chlorosilanes having various organic substituents can be applied, in order to influence the polymeric characteristics or the ceramic composition. Further, the ratio of the chlorides can be adjusted arbitrarily and, instead of methylamine, other primary amines can applied for crosslinking.

## Claims

1. A method for the production of a preceramic polymer comprising reacting a mixture of at least two compounds selected from SiHalₓR₄₋ₓ, BHal_{y}R'_{3-y}, TiHalₓR₄₋ₓ, AlHal_{y}R'_{3-y}, GaHal_{y}R'_{3-y}, InHal_{y}R'_{3-y}, GeHalₓR₄₋ₓ, PHal_{y}R'_{3-y}, PHal_{z}R_{5-z}, ZrHalₓR₄₋ₓ, VHal_{y}R'_{3-y}, VHalₓR₄₋ₓ, NbHal_{z}R_{5-z}, TaHal_{z}-R_{5-z}, CrHal_{y}R'_{3-y}, MoHalₓR₄₋ₓ, MoHal_{z}R_{5-z}, WHal_{z}R_{6-z}, FeHal_{y}R'_{3-y} or ZnCl₂, wherein x is an integer from 1 to 4,
y is an integer from 1 to 3,
z is an integer from 1 to 5,
R is hydrogen or a hydrocarbon residue,
R' is hydrogen or a hydrocarbon residue and
Hal is halogen,
with a primary amine R¹-NH₂,
wherein R¹ is a hydrocarbon residue.

2. The method according to claim 1 for the production of an SiBNC preceramic polymer comprising reacting a mixture of SiHalₓR₄₋ₓ and BHal_{y}R'_{3-y},
wherein x is an integer from 1 to 4,
R is hydrogen or a hydrocarbon residue,
y is an integer from 1 to 3,
R' is hydrogen or a hydrocarbon residue and
Hal is halogen,
with a primary amine R¹-NH₂,
wherein R¹ is a hydrocarbon residue.

3. The method of claim 1 or 2, wherein the reaction is performed in an aprotic organic solvent.

4. The method of claim 1, 2 or 3, wherein the byproduct NH₄Hal formed during the reaction is separated off.

5. The method according to any of the preceeding claims further comprising the step separating off solvent to obtain a preceramic polymer.

6. The method according to any of the preceeding claims, wherein the viscosity of the preceramic polymer is adjusted by a temperature treatment.

7. The method according to any of the preceeding claims, wherein an excess of primary amine R¹-NH₂ is provided.

8. A method for the production of a ceramic comprising
i) providing a preceramic polymer according to any of claims 1 to 7 and
ii) pyrolysis of the preceramic polymer at a temperature of from 360°C up to 1400°C produce a ceramic.

9. The method according to claim 8 for the production of an SiBNC ceramic comprising
i) providing an SiBNC preceramic polymer according to any of claims 2 to 7 and
ii) pyrolysis of the SiBNC preceramic polymer at a temperature of from 360°C up to 1400°C produce an SiBNC ceramic.

10. The method of claim 8 or 9, wherein pyrolysis is performed in an inert atmosphere.

11. The method of any of claims 8 to 10, wherein the produced SiBNC ceramic has a density of less than 2.5 g/cm³.
